# EUROPEAN PATENT APPLICATION

(11) **EP 1 517 475 A1**
(43) Date of publication of application: **23.03.2005**
(21) Application number: 03292277.5
(22) Date of filing: 16.09.2003
(51) Int. Cl.: H04L 12/28

(54) **Smart card based encryption in Wi-Fi communication**

(71) Applicant: Axalto S.A., 92120 Montrouge (FR)
(72) Inventor: Shannon, Antonius, 92120 Montrouge (FR)
(74) Representative: Cassagne, Philippe M.J.

(57) **Abstract**

A method for performing a secure Wi-Fi communication between a computer of a user and an access point of a service operator, the portable device comprising a card in which a user authentication key KI is stored, the authentication key KI being specific to the user card and known from the service operator, the method comprises the following successive steps :
a) an authentication step consisting of :
   a1) authenticating the user of the portable device based on authentication key KI comparison,
   a2) generating an encryption key KB,
b) a message generation and transmission step, performed by the access point, consisting of :
   b1) generating a random session key KA,
   b2) encrypting a packet of data with the help of the random session key KA,
   b3) encrypting the session key KA with the help of the encryption key KB so as to form an encrypted random session key KA',
   b4) forming a message comprising the encrypted random session key KA' and the encrypted packet of data,
c) a session key decrypting step performed by the card, consisting of decrypting the encrypted random session key KA' with the help of the encryption key KB so as to obtain the random session key KA,
d) a data decrypting step performed by the portable device, consisting of decrypting the packet of data with the help of the random session key KA.

## Description

### Field of the invention

The invention relates to a method for performing a secure Wi-Fi communication between a computer of a user and an access point of a service operator.

### Background of the invention

Wi-Fi stands for Wireless Fidelity and is the trademark of the Wi-Fi Alliance which certify the interoperability of wireless communications products using 802.11 based standards.

The key components to Wi-Fi are the network interface card, the access point and the LAN bridge.

The network interface card is a wireless modem that is installed on the users' computer (namely a desktop computer or a portable device like a laptop, a personal digital assistant PDA, a tablet personal computer PC, etc...).

The access point behaves in the same way as a base station in a mobile telecommunication network, providing the gateway between the wireless and fixed line worlds in the form of a Wi-Fi "cell", from which users can access the network. The access points communicate with network interface cards when they are in the range for access. Currently, a typical access point will cover a 70-100m area and enable up to 64 simultaneous users connections.

The LAN (Local Area Network) bridge, also called extension points, are used to connect LANs in different buildings. A LAN bridge connected to the network in one building can transmit and receive data from another bridge in an adjacent building, much like a point-to-point radio. LAN bridge products support fairly high data rates and ranges of several kilometers with the use of line-of-sight directional antennas. There are at least 2 types of LAN, the WLAN and the PWLAN.

The WLAN or wireless LAN is basically the term given when a LAN is created using Wi-Fi technology.

The PWLAN or public wireless LAN is basically the provision of WLAN services to the general public in public places, typically called "hot spots". Hot spots can be found in airport, hotels, coffee shops, shopping malls and conference centers, etc...

The level of security provided with Wi-Fi is very poor. In the most basic form the access point will make use of wired equivalent privacy mechanism for authentication. Such a mechanism provides 2 levels of security: an open system, which provides no security and all terminals are allowed to use the system, and a shared-key authentication. The shared-key authentication mechanism is based upon the fact all users and access points have a common shared secret key. The access point sends a random challenge parameter that the station must encrypt and return. If the access point computes the same response based on the shared keys then validation is successful. Given that this key is common between all users of the same access point, it fails to provide any satisfactory level of security. For this reason, there is a need of stronger mechanisms for authentication and encryption.

It has already been proposed a smart card-based authentication as a security solution for Wi-Fi system. A proposed solution is based on existing solutions used by GSM telecommunication network operators. In particular, there are solutions based on mechanism for authentication and session key distribution using the GSM subscriber identity module (know as SIM card).

Nevertheless, once the secure authentication has been done, there is still security issues in the communication because the information inside a hot spot can still be trapped. The only possible solution for this is to do an encrypted communication between the end user computer (i.e the user's workstation) and the access point computer.

It has already been proposed to encrypt messages at the portable device or computer level. However, this raised security problems as software of the computer can be easily cracked .

### Object and summary of the invention

Therefore it is an object of the present invention to provide a method for performing a secure Wi-Fi communication between a computer of a user and an access point of a Wi-Fi service operator that overcomes the at least one shortcoming of the prior art communication methods.

The method of the invention for performing a secure Wi-Fi communication involves a smart card-based encryption mechanism. In particular, a first key (session key) generated randomly is used to encrypt a data packet. The first key is transmitted with the data packet in a message but encrypted under a second key (encryption key). The card is used to protect from hacking the session key that will be used to protect the real and complete data to be transmitted between the user's computer and the access point.

According to the invention, the method for performing a secure Wi-Fi communication between a computer of a user and an access point of a service operator, the computer comprising a card in which a user authentication key KI is stored, said authentication key KI being specific to the user card and known from the service operator, comprises the following successive steps :
a) an authentication step consisting of :
   a1) authenticating the user of the portable device based on authentication key KI comparison,
   a2) generating an encryption key KB,
b) a message generation and transmission step, performed by the access point, consisting of :
   b1) generating a random session key KA,
   b2) encrypting a packet of data with the help of the random session key KA,
   b3) encrypting the session key KA with the help of the encryption key KB so as to form an encrypted random session key KA',
   b4) forming a message comprising the encrypted random session key KA' and the encrypted packet of data,
c) a session key decrypting step performed by the card, consisting of decrypting the encrypted random session key KA' with the help of the encryption key KB so as to obtain the random session key KA,
d) a data decrypting step performed by the user's computer, consisting of decrypting the packet of data with the help of the random session key KA.

Advantageously, the step of authenticating the user of the computer based on the indirect authentication key KI comparison further comprises the steps of :
a1.1) preparing in an authentication center of the service operator a vector comprising three values based on an authentication algorithm using the authentication key KI, said values being a random value, a calculation result comparison and a calculation result for encryption key using the random value,
a1.2) sending the random value as a challenge to the computer of the user,
a1.3) preparing in the computer of the user an authentication resulting value based on the random value and the same authentication algorithm,
a1.4) sending the authentication resulting value to the authentication center of the service operator, and comparing said value with the pre-defined value comprised in the vector,
a1.5) authenticating the user of the computer based on positive comparison.

Advantageously, the step of generating an encryption key KB consists in using the random value for calculating in the computer of the user the encryption key KB using a service operator specific authentication algorithm.

According to another characteristic of the invention, the message generation and transmission step, the session key decrypting step and the data decrypting step are re-iterated in case further data are to be transmitted.
In case no further data are to be transmitted, the session is closed.
Advantageously, the encryption key KB is generated for each authentication. The encryption key is different as the result of the authentication process because a random value is prepared for every authentication.
The session key KA can be generated for one message transmission. Alternatively, the session key KA can be generated for several consecutive message transmission.

With the method of the invention, the speed limitation of smart card to process data does not prevent to have a high-speed communication between the user's computer and the access point.

Consequently, with the method of the invention, it is possible to perform a secure communication between the computer and the access point based on the strength of smart card based encryption while maintaining a high-speed communication.

Other characteristics and advantages of the invention will be described in more detailed in the following description of the invention and in one practical example of application.

### Brief description of the drawings

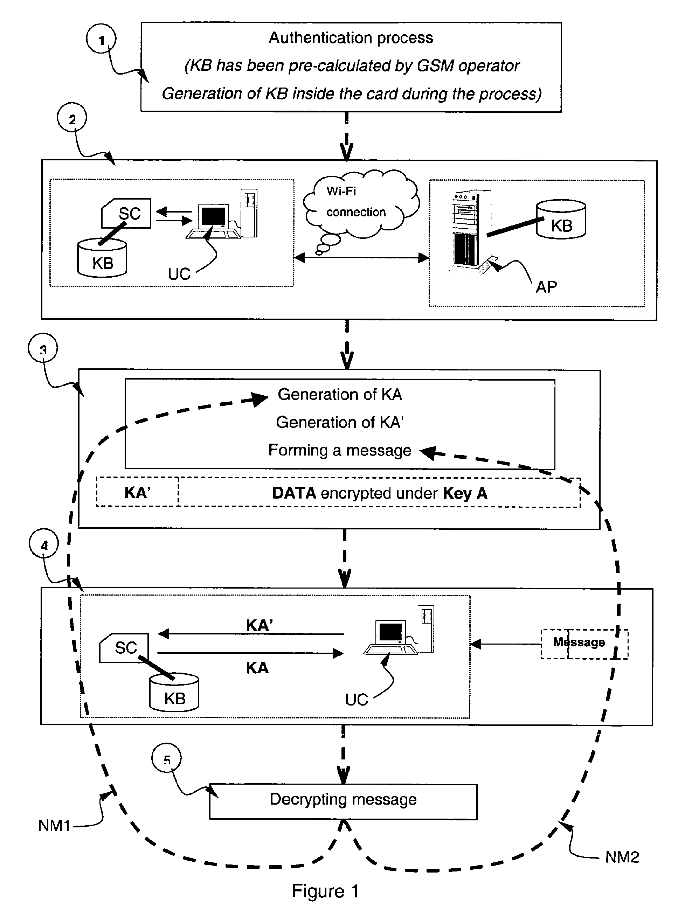

The following detailed description, given by way of example, will be best understood with the accompanying drawing in which the unique Figure 1 schematically illustrates the different steps of the method for performing an encrypted Wi-Fi communication according to the invention.

### Detailed description of the invention

Users' computer means any work station being either a desktop computer or a portable device like a laptop computer, a personal digital assistant PDA, a tablet personal computer PC, etc... which comprises a Wi-Fi network interface card enabling a connection to an access point.
Card or smart card means any portable object being either a token, or a plastic card, a plug, etc... which comprises an embedded microprocessor.
Users' computer comprising a card means that the users' computer is either fitted with, or connected to a card or a smart card by ways of card reader.

The unique drawing illustrates schematically the successive steps of an encrypted Wi-Fi communication according to the invention.

During the first step 1, the authentication process is done. The user of the computer is authenticated based on indirect authentication key KI comparison.
The comparison is indirectly based on authentication key KI in the sense that the KI is not directly compared. Instead, the comparison is done for the calculation result using the random value and an authentication algorithm (the authentication algorithm depends of the operator).

The card comprises a specific file in which the authentication key KI is stored (KI file) and a specific algorithm analog to GSM system. The authentication key KI is unique for each card (randomly generated), so that there can be only one user that is able to use the card. The value of the authentication key KI is communicated to the GSM operator when the personalized cards are being delivered from the factory. These values will then be stored securely in their Authentication Center for further use. During the authentication process, GSM operator will communicate a vector with three values (already prepared in their Authentication Center) to the Wi-Fi operator which eventually will be directed to the access-point computer AP (random value, calculation result for comparison and calculation result for encryption key). Consequently, a secure authentication can be performed.

During the second step 2, as the result of the authentication process, the same encryption key KB is stored both in access-point computer memory and in the card.
A new value is set for every new communication as the result of the authentication process. Renewing the encryption key KB for each authentication enables to improve security of the whole method.

During the third step 3, the message to be transmitted is generated by the access point computer AP. The access point computer AP will first generate a random number called a session key KA. The session key KA is encrypted under encryption key KB, so as to obtain a encrypted session key KA'. The data to be transmitted are encrypted under session key KA. A message comprising the encrypted session key KA' and the encrypted data is formed.

During the fourth step 4, the message is transmitted to the user's computer via the Wi-Fi connection. The card SC performed a decryption of encrypted session key KA' using the stored encryption key KB so as to obtain the session key KA.

During the fifth step 5, once the session key KA has been obtain by the appropriate program in user's workstation, the message is decrypted by using the session key KA and the user's program can make further processing on the message.

In a first alternative NM1, the session key KA is generated for only one message transmission. Thus, in case a second message needs to be transmitted, the process begin at the step consisting in generating a new session key KA.
In a second alternative, the session key KA is generated for several consecutive message transmission. Thus, in case a second message needs to be transmitted, the process begin at the step consisting of forming the message based on the same session key KA.

It is to be noted that the same process could be done vice versa, namely the workstation will generate another random value as session key KA and encrypt the data to be sent to access point computer under this session key. The user's computer will then use the smart card SC to encrypt session key KA under encryption key KB so that another encrypted session key KA' is obtained. Finally, the message will be formed and sent to access point computer where it will be decrypted based on the same process.

According to the invention, a secure communication between user's computer (workstation) and access point computer is achieved. Sensitive information (encryption key) is stored in the card which has stronger protection compared to a program software in the workstation. There are two transaction / session involved, thus adding the strength on security by generating the encryption key during the authentication process, and by generating the session key for one or several consecutive message(s) transmission.
Advantageously, the speed limitation of the card is avoided since the card processes only a few quantity information (session and encryption keys only), and not the whole data packet. Consequently, the communication performance is maintained. Finally, security is improved by the fact that the whole process is not possible in case a card is physically not present or connected to user's computer.

## Claims

1. A method for performing a secure Wi-Fi communication between a computer of a user and an access point of a service operator, said computer comprising a card in which a user authentication key KI is stored, said authentication key KI being specific to the user card and known from the service operator, the method comprising the following successive steps :
a) an authentication step consisting of :
a1) authenticating the user of the computer based on an indirect authentication key KI comparison,
a2) generating an encryption key KB,
b) a message generation and transmission step, performed by the access point, consisting of :
b1) generating a random session key KA,
b2) encrypting a packet of data with the help of the random session key KA,
b3) encrypting the session key KA with the help of the encryption key KB so as to form an encrypted random session key KA',
b4) forming a message comprising the encrypted random session key KA' and the encrypted packet of data,
c) a session key decrypting step performed by the card, consisting of decrypting the encrypted random session key KA' with the help of the encryption key KB so as to obtain the random session key KA,
d) a data decrypting step performed by the computer, consisting of decrypting the packet of data with the help of the random session key KA.

2. A method for performing a secure Wi-Fi communication as recited in claim 1, wherein the step of authenticating the user of the computer based on an indirect authentication key KI comparison further comprises the steps of :
a1.1) preparing in an authentication center of the service operator a vector comprising three values based on an authentication algorithm using the authentication key KI, said values being a random value, a calculation result comparison and a calculation result for encryption key using the random value,
a1.2) sending the random value as a challenge to the computer of the user,
a1.3) preparing in the computer of the user an authentication resulting value based on the random value and the same authentication algorithm,
a1.4) sending the authentication resulting value to the authentication center of the service operator, and comparing said value with the pre-defined value comprised in the vector,
a1.5) authenticating the user of the computer based on positive comparison.

3. A method for performing a secure Wi-Fi communication as recited in any of the preceding claims, wherein the step of generating an encryption key KB consists in using the random value for calculating in the computer of the user the encryption key KB using a service operator specific authentication algorithm.

4. A method for performing a secure Wi-Fi communication as recited in any of the preceding claims, consisting in re-iterating the message generation and transmission step, the session key decrypting step and the data decrypting step in case further data are to be transmitted.

5. A method for performing a secure Wi-Fi communication as recited in any of the preceding claims, consisting in closing the session in case no further data are to be transmitted.

6. A method for performing a secure Wi-Fi communication as recited in one of the claims 1 to 3, wherein the encryption key KB is generated for each authentication.

7. A method for performing a secure Wi-Fi communication as recited in any of the preceding claims, wherein the session key KA is generated for one message transmission.

8. A method for performing a secure Wi-Fi communication as recited in any of the claims 1 to 6, wherein the session key KA is generated for several consecutive message transmission.
